# EUROPEAN PATENT SPECIFICATION

(11) **EP 4 410 405 B1**
(45) Date of publication and mention of the grant of the patent: **23.09.2026**
(21) Application number: 23183702.2
(22) Date of filing: 05.07.2023
(51) Int. Cl.: B01D 53/62, B01D 53/96

(54) **DIRECT AIR CAPTURE FOR CARBON DIOXIDE**
DIREKTE LUFTERFASSUNG FÜR KOHLENDIOXID
CAPTURE D'AIR DIRECTE POUR DIOXYDE DE CARBONE

(30) Priority: 06.02.2023 DE 102023102851
(43) Date of publication of application: 07.08.2024
(73) Proprietor: Obrist Technologies GmbH, 6890 Lustenau (AT)
(72) Inventor: WESNER, Wolfgang, 1220 Wien (AT)
(74) Representative: Thum & Partner I Thum Mötsch Weickert Patentanwälte PartG mbB

(56) References cited:
- WO-A2-2006/036396
- CN-U- 210 710 769
- KR-A- 20050 017 649
- US-A- 4 197 421
- US-B2- 8 119 091
- THOMAS AUTHUR M ET AL: "Thermal Decomposition of Sodium Carbonate Solutions", JOURNAL OF CHEMICAL AND ENGINEERING DATA, 1 January 1963 (1963-01-01), pages 51 - 54, XP093109307, Retrieved from the Internet <URL:https://pubs.acs.org/doi/abs/10.1021/je60016a014> [retrieved on 20231205], DOI: 10.1021/je60016a014
- ATSUSHI IIZUKA ET AL: "Carbon dioxide recovery from carbonate solutions using bipolar membrane electrodialysis", SEPARATION AND PURIFICATION TECHNOLOGY, vol. 101, 1 November 2012 (2012-11-01), NL, pages 49 - 59, XP055679003, ISSN: 1383-5866, DOI: 10.1016/j.seppur.2012.09.016

## Description

### Technical Field

The invention relates to a method for capturing carbon dioxide from a gas comprising carbon dioxide, in particular from air or exhaust gas, comprising as a first step to bring the gas into contact with sodium hydroxide solution to form sodium carbonate.

### Background Art

In view of the global carbon dioxide (CO₂) problem, processes for the recovery of carbon dioxide from air or exhaust gas have become more and more the focus of interest in recent years. Thereby, in particular, applications known as "direct air capture" (DAC), in which ambient air is used as a source of carbon dioxide, are of particular interest.

Numerous processes with this aim have been developed and published in recent years. Especially, various chemical absorbents or adsorbents have been proposed for use in such processes. In principle, many basic substances are suitable for more or less selective enrichment of carbon dioxide from air or exhaust gases. The classical absorbents for binding carbon dioxide from exhaust gases are solutions of alkali or alkaline earth hydroxides. It was shown that the higher the concentration and basicity of the solution, the faster and more complete the carbon dioxide absorption from gas streams.

WO 2022/192408 A2 (Susteon Inc.) discloses for example a structural material assembly for removing and desorbing CO₂ gas. Thereby, inter alia, sodium hydroxide is described as a sorbent for CO₂. This approach requires special supporting substrates.

US 2022/355244 A1 (Baker Hughes Oilfield Operations LLC) discloses a process wherein a mixture of atmospheric air and carbon dioxide is fed to a contactor within a carbon dioxide capture module. Therein, the carbon from the carbon dioxide is captured with sorbents such as e.g. a sodium hydroxide solution.

Further, US 8,119,091 B2 (Carbon Engineering Limited Partnership) describes methods for carbon dioxide capture based on the reaction of carbon dioxide with sodium hydroxide and a subsequent treatment with special titanates to obtain carbon dioxide and sodium hydroxide. This process is lavish and requires special chemicals. Absorption of CO₂ from air with natural convection (i.e. wind) in KOH using microporous hollow fibre membranes and subsequent desorption of CO₂ by electrolysis of K₂CO₃ is a viable way of producing a synthesis gas for the synthesis of methanol with a minimum energy input.There are also approaches for capture of CO₂ based on other basic substances: The article "Coupled CO2 recovery from the atmosphere and water electrolysis: Feasibility of a new process for hydrogen storage" (S. Stucki et al. in International Journal of Hydrogen Energy, International Journal of Hydrogen Energy Volume 20, Issue 8, August 1995, Pages 653-663) describes the absorption of CO₂ from air with natural convection (i.e. wind) in KOH using microporous hollow fibre membranes and subsequent desorption of CO₂ by electrolysis of K₂CO₃ for producing a synthesis gas for the synthesis of methanol. However, such processes based on KOH are inter alia problematic due to the classification as harmful substance (GHS07) of the Globally Harmonized System of Classification and Labelling of Chemicals. Also special membranes are required.

Especially, caustic soda (NaOH solution) can be used to bind carbon dioxide. In the first stage, sodium carbonate (Na₂CO₃) is formed, which can absorb further carbon dioxide to result in sodium hydrogencarbonate (NaHCO₃) in the second stage. However, this second reaction step is a reaction, proportional to the carbon dioxide partial pressure of the gas flow that is brought into contact with sodium carbonate. For the binding of ambient air containing of 400 ppm carbon dioxide, the equilibrium is predominantly with the starting product sodium carbonate. Therefore, in the second stage, only small amounts of carbon dioxide can be captured in a rather slow and inefficient process.

In many processes for the direct extraction of carbon dioxide from air or exhaust gases with low carbon dioxide content, regeneration of the sodium carbonate to sodium hydroxide is thus proposed. Sodium carbonate can be thermally decomposed to sodium hydroxide and carbon dioxide, but a temperature over 1600°C usually is required. Due to the energy requirements and the costs, direct thermal decomposition therefore is not suitable for practical applications.

A known indirect process is the regeneration of sodium carbonate with calcium hydroxide [Ca(OH)₂; Kraft process]. Due to the poor solubility of calcium carbonate in water at high pH value, practically all the carbon dioxide bound in sodium carbonate can be transferred to calcium hydroxide, whereby caustic soda is released again.

In a further step, the precipitated calcium carbonate is calcined, releasing carbon dioxide as a gas. Calcination takes place at temperatures above 900°C. Although this is a significantly lower temperature than is required for the direct thermal decomposition of sodium carbonate, the temperature is still too high to use industrial waste heat or regenerative energy sources such as solar heat directly.

Furthermore, the release of carbon dioxide from sodium carbonate by adding protonic acids is known. Thereby, sodium salts are produced in addition to the released carbon dioxide.

Different variants of electrochemical regeneration of sodium carbonate have been proposed as well. An overview is given in US 2007/0187247 A1 (Lackner et al.) where electrochemically generated acid is used for the release of carbon dioxide. The resulting salt is separated into acid and sodium hydroxide via bipolar membranes. However, such processes are rather complicated and energy-intensive.

For thermodynamic reasons, for the release of carbon dioxide in the above mentioned processes requires a lot of energy. Furthermore, the known processes for decomposing sodium carbonate to carbon dioxide and sodium hydroxide are carried out at very high temperatures and are therefore particularly costly in terms of energy. Other known processes require expensive or problematic reagents such as titanates, potassium hydroxide and the like.

Thus, there is still a need for improved solutions that overcome the aforementioned drawbacks at least partly.

### Summary of the invention

It is therefore the object of the invention to create a process pertaining to the technical field initially mentioned, wherewith the decomposition of sodium carbonate to carbon dioxide and sodium hydroxide can be achieved cost-effectively at relatively low temperatures.

The solution of the invention is specified by the features of the independent claim.

Specifically, the core of the invention is a method for capturing carbon dioxide from a gas comprising carbon dioxide, in particular from air or exhaust gas, comprising the following steps:
a) in a first step, the gas comprising carbon dioxide is brought into contact with sodium hydroxide, especially a sodium hydroxide solution and/or solid sodium hydroxide, to absorb carbon dioxide and form sodium carbonate,
characterized in that
b) in a second step, gaseous carbon dioxide and sodium hydroxide, especially an aqueous solution of sodium hydroxide, are formed at a temperature below 350°C, preferably below 250 °C, more preferably between 90°C and 200°C, out of the sodium carbonate obtained in the first step and/or out of sodium hydrogencarbonate converted from the sodium carbonate obtained in the first step a);
the second step being carried out according to the following procedure I:
I. the sodium carbonate obtained in the first step is provided in the solid state and at least partially decomposed thermally, whereby gaseous carbon dioxide is released and sodium hydroxide obtained by the thermal decomposition is extracted, especially in parallel to the thermal decomposition of the sodium carbonate, preferably by an extraction agent;

The inventive method provides for an effective, inexpensive, sustainable and robust process for capturing carbon dioxide from air or exhaust gases. The present method is particularly suitable for the application known as "direct air capture" (DAC), in which ambient air is used as a source of carbon dioxide.

According to the invention, the method can consume large amounts of energy required at a low temperature level. Heat at a level below 350°C is available from solar thermal energy in practically unlimited quantities and is CO₂ neutral and inexpensive. According to the invention, the decomposition of the sodium carbonate takes place at low temperatures (below 350 °C), preferably with heat from solar thermal energy and/or waste heat. However, the use of other energy sources, e.g. thermal energy produced via conversion of photovoltaic, wind or other energy sources is also possible.

The inventive process can be carried out particularly advantageously in the sun belt, along the equator, between the northern and southern turn radius, and/or in deserts. In these locations, almost any amount of solar thermal energy can be generated via solar radiation.

According to the invention, the binding of carbon dioxide from ambient air and/or from exhaust gas streams with slightly elevated carbon dioxide concentrations, can be established by use of low-cost sodium hydroxide, which is readily available on the market and/or can be obtained on site from seawater using the brine of water desalination plants and an electrolysis process.

In the present context, "aqueous caustic soda" or "caustic soda" is meant to be an aqueous sodium hydroxide solution. Especially, the aqueous caustic soda is a concentrated aqueous caustic soda, a saturated aqueous caustic soda or a supersaturated aqueous caustic soda.

Aqueous caustic soda with a sodium hydroxide concentration of at least 10 mol/l is also referred to as concentrated aqueous caustic soda, whereas at room temperature, saturated aqueous caustic soda has a sodium hydroxide concentration of about 32 mol/l and aqueous caustic soda with a higher concentration is called supersaturated aqueous caustic soda. At different temperatures, the saturation concentration changes.

For example, the aqueous caustic soda has a sodium hydroxide concentration of 1 - 32 mol/l, in particular 10 - 19 mol/l.

In particular, in the inventive method, no calcium compound, especially no calcium hydroxide is used in step a) and/or step b).

Further preferred in the inventive method, no potassium compound, especially no potassium hydroxide is used in step a) and/or step b).

Also, preferably, no microporous hollow fiber membranes are used in step a) and/or step b).

In particular, step b) is performed at a time interval from step a), e.g. a time interval of at least one minute, at least one hour, at least one day, at least one week or at least one month; and/or step b) is performed at a location other than step a).

Especially, the sodium carbonate obtained in step a) is temporarily stored, e.g. for at least one minute, at least one hour, at least one day, at least one week or at least one month, before it is subjected to step b). Thereby, the sodium carbonate can for example be stored in solid form and/or in the form of an aqueous solution.

The carbon dioxide captured with the inventive method is preferably used for producing further chemical substances, especially methanol, and/or it is further converted to solid carbon.

Especially, the captured carbon dioxide after step b) is reacted with hydrogen to produce methanol and/or carbon (C). For producing methanol, a Sabatier reaction can be performed whereas carbon can be produced via a Bosch reaction.

In the first step or step a) respectively, the gas comprising carbon dioxide is brought into contact with sodium hydroxide to form the sodium carbonate. In principle, the sodium hydroxide can be provided in any form suitable for reaction with gaseous carbon dioxide comprised in the gas to be treated.

In step a), in particular, a gas comprising carbon dioxide and moisture, especially residual moisture, and/or an additional gas comprising moisture, especially residual moisture, can additionally be brought into contact with the sodium hydroxide, especially a sodium hydroxide solution and/or solid sodium hydroxide, for absorbing water. The water can further be used in the inventive processes and/or for other purposes.

In particular, step a) is performed such that a water loss, especially a water loss to the atmosphere, is essentially avoided. This can in particular be achieved by sufficiently high amounts or proportions of sodium hydroxide.

In a first preferred embodiment, in the first step a), the gas comprising carbon dioxide is brought into contact with solid sodium hydroxide particles, especially powdery sodium hydroxide.

Thereby, in particular, gas comprising carbon dioxide and moisture, especially residual moisture, is used. Usually, this is for example given when using air or exhaust gas as the gas comprising carbon dioxide in step a). This allows for an in-situ generation of aqueous caustic soda that can be reacted with the carbon dioxide in a highly efficient manner. Furthermore, no additional water is required under these conditions.

However, if desired, the gas comprising carbon dioxide can also be brought into contact with solid sodium hydroxide particles, especially powdery sodium hydroxide, in the presence of additional water vapour, especially by humidifying the gas comprising carbon dioxide.

Especially, the solid sodium hydroxide particles are brought into contact with a gas comprising moisture, especially residual moisture, in particular such that aqueous caustic soda, especially concentrated aqueous caustic soda, is formed, and during and/or after formation of the aqueous caustic soda, the obtained caustic soda is brought into contact with the gas comprising carbon dioxide in order to produce the sodium carbonate. The gas comprising moisture can e.g. the gas comprising carbon dioxide to be contacted with the sodium hydroxide and/or another gas comprising moisture.

If desired, the solid sodium hydroxide particles can also be brought into contact with additional water vapor, especially humified air.

For example, the solid sodium hydroxide particles are passed through a channel, especially driven by gravity, whereby a gas comprising moisture, especially water vapour, e.g. humid air, is guided through and/or introduced into the channel, for example in a counterflow direction, to form the aqueous caustic soda. The sodium hydroxide particles can e.g. be introduced into the channel with a particle dispenser, especially a powder sprayer. According to a second highly beneficial embodiment, in the first step a), the gas comprising carbon dioxide is brought into contact with a sodium hydroxide solution, in particular with aqueous caustic soda, to form the sodium carbonate. Especially the aqueous caustic soda is a concentrated aqueous caustic soda, a saturated aqueous caustic soda or a supersaturated aqueous caustic soda. In particular, the aqueous caustic soda has a sodium hydroxide concentration of 1 - 32 mol/l, in particular 10 - 19 mol/l. This is another possibility to obtain sodium carbonate in a highly efficient manner. Thereby, aqueous caustic soda that is readily available on the market at low prices can directly be used without further treatment.

Preferably, a sodium hydroxide solution, in particular concentrated aqueous caustic soda, is trickled and/or sprayed in a washer, to come into intensive contact with the gas comprising carbon dioxide. This reaction produces sodium carbonate (Na₂CO₃), which, by exceeding the solubility product as a result of CO₂ uptake from the gas, precipitates without further action.

Depending on the humidity of the gas comprising carbon dioxide, caustic soda can release or absorb water. The more concentrated the caustic soda is, the stronger the tendency to absorb water from the gas phase. As a rule, in general it is desired to lose or accumulate as little water as possible in the washer. There is an optimal concentration of caustic soda for a specific humidity and temperature of the gas comprising the carbon dioxide. Concentrations between 3 wt.% and 50 wt.% can be realized with this method, with concentrations of 28 wt.% and more, a water loss can be completely avoided under average conditions.

It should be noted that the absorption slows down at low sodium hydroxide concentrations and, with the same dimensions of the washer, less carbon dioxide can be converted per time with the washer. Also, the solubility of sodium carbonate decreases with increasing concentration, which is conducive to the precipitation of sodium carbonate. Optimal operation of the system therefore takes place with the highest possible concentration of sodium hydroxide. According to the invention, a regulation of the sodium hydroxide content of the washing solution can be established as a function of the gas humidity. The precipitated soda can be settled at the bottom of the washer during continuous operation, where it can be drawn off and be filtered and/or centrifuged.

Alternatively or additionally, the washer can also be filled with inert filling material, wherein the sodium hydroxide solution is sprinkled over it, so that the wetted surface of the surface of the filling material serves as a contact surface for the absorption of the CO₂ by the caustic soda. With this process embodiment, the caustic soda partially settles on the filling material, where after some time it can be dissolved by sprinkling water over the filling material.

This embodiment of the process usually requires a discontinuous mode of operation. The pressure drop of the gas is somewhat higher than in the unfilled washer. However, the energy consumption for pumping and distributing and/or atomizing the caustic soda is lower. Large drops are completely sufficient here, which is especially advantageous for very highly concentrated sodium hydroxide solutions. Aerosol formation can also be kept low in this embodiment. Combinations of the two embodiment are possible, where the soda is drawn off continuously and only from time to time the soda is dissolved on the filling material.

A highly preferred embodiment provides for the use of inert filling material in an absorption container. Concentrated sodium hydroxide solution is preferably sprinkled over the filling material. The sodium carbonate suspension is preferably drawn off via the bottom and preferably fed to a filtration system. The filtrate is preferably sprinkled again.

Whenever a larger amount of sodium carbonate has settled on the surface of the filling material, the absorption container is preferably filled with sodium hydroxide solution from a storage tank, so that the filling material is overloaded. Preferably, compressed air is then blown in at the bottom of the absorber. The air bubbles cause intensive mechanical movement of the filling material, whereby sodium carbonate deposited on the filling material is suspended in the sodium hydroxide solution. This suspension can then be pumped out of the bottom of the absorption tank. With this optimized embodiment, interruptions of the absorption process are only short. Even while using compressed air to clean the filling material, the process comes close to a continuous operation.

One advantage of this process is that soda obtained during absorption is preferably obtained in solid form. This means that it can be cleanly separated from the caustic soda or the sodium hydroxide solution, respectively, and can be used as a product without any problems, and/or can be stored until further processing. This is particularly interesting when further processing is energy-intensive, and the energy for this is to be used from regenerative sources such as solar radiation and/or wind.

In the second step, gaseous carbon dioxide and sodium hydroxide solution, especially an aqueous solution of sodium hydroxide, are formed at a temperature below 350 °C, preferably below 250 °C, more preferably between 90 °C and 200 °C, out of the sodium carbonate obtained in the first step a) and/or out of sodium hydrogencarbonate converted from the sodium carbonate obtained in the first step a).

Preferably, the sodium hydroxide, especially the solution of sodium hydroxide, obtained in the second step b) is returned to and reused in the first step a). Preferably, before returning the solution of sodium hydroxide, it is concentrated. However, the sodium hydroxide can also be used for other purposes.

Highly preferred, the thermal energy required in the second step b) is provided in the form of heat from a solar thermal collector, a solar thermal energy plant and/or waste heat. Put differently, the thermal decomposition in the second step b) preferably is carried out with heat form a solar thermal collector, solar thermal energy plant and/or waste heat. Thus, in particular, the inventive method further comprises a step of obtaining heat form a solar thermal collector solar, a solar thermal energy plant and/or waste heat and providing the heat in step b) for thermal decomposition of the sodium carbonate and/or sodium hydrogencarbonate converted from the sodium carbonate obtained in the first step a).

In procedure I of the second step b), the sodium carbonate is provided in the solid state, e.g. by precipitation of the sodium carbonate from the caustic soda in step a), and thermally decomposed to release gaseous carbon dioxide. Preferably, the sodium carbonate to be decomposed is present in the form of a particulate material, e.g. a powdery material.

In procedure I, sodium hydroxide (NaOH) produced during the thermal decomposition process of Na₂CO₃ is extracted. The extraction further drives the decomposition process so that complete decomposition is possible.

In addition to discontinuous processes, which provide for a succession of decomposition phases and extraction phases, continuous processes for the complete decomposition of sodium carbonate at relatively low temperatures are also possible. In procedure I, decomposition and extraction in particular take place simultaneously.

In a preferred embodiment of procedure I, water is used as extraction agent, whereby, preferably, sodium carbonate at least partially precipitates and sodium hydroxide remains in solution.

Preferably, when water is used as the extracting agent, the solution, in order to carry out as little sodium carbonate as possible with it, is in a preferred embodiment only withdrawn when it is rich in sodium hydroxide, since the solubility of sodium carbonate then becomes very low. The recovered solution with small amounts of sodium carbonate can preferably be directly returned to step a).

In another preferred embodiment, an aqueous solution of a water soluble alcohol, preferably a water soluble primary alcohol, more preferably methanol, ethanol, n-propanol, n-butanol or a mixture thereof, are used as extraction agent, and, preferably, sodium carbonate at least partially precipitates and sodium hydroxide remains in solution.

In these alcoholic solutions, sodium hydroxide exhibits a good solubility. At the same time, the solubility of sodium carbonate in the alcoholic solutions is significantly lower than in pure water. Therefore, sodium carbonate can selectively be extracted from the mixture of sodium carbonate and sodium hydroxide when using such alcohols or solutions of such alcohols in water. The skilled person is also aware of other solutions (water-based or non-water-based solutions) which have these solubility properties compared to sodium carbonate and sodium hydroxide and can thus be used in this process.

In particular, during and/or after the extraction the extraction agent with sodium hydroxide dissolved therein is subjected to a separation process, especially distillation, in order to recover sodium hydroxide and the extraction agent.

For example, the extraction solution is preferably evaporated to dryness, the extracting agent being preferably recovered as distillate and the dry residue being preferably taken up in water. This so obtained sodium hydroxide solution, which in particular is highly concentrated, is preferably returned to step a).

Specifically, for example, the sodium carbonate is dripped with water from above in a column heated to over 95°C. The caustic soda is then preferably removed from the column. Carbon dioxide is released and escapes at the top of the column. Caustic soda and sodium carbonate preferably dissolve in the water, with the caustic soda preferably accumulating as it passes through the sodium carbonate. This pushes back the solubility of sodium carbonate and preferably much of the sodium carbonate dissolved at the top of the column precipitates out again. The solution dripping from the bottom of the column can preferably be fed directly back to step a).

In the following, further and especially preferred exemplary embodiments of the procedure I of the second step b) are described.

For example, the steps of releasing carbon dioxide and extracting the resulting sodium hydroxide can be carried out separately one after the other in a discontinuous manner, especially with water.

Thereby, in particular, after the extraction, in a first substep the sodium carbonate in solid form, e.g. the precipitated sodium carbonate, in particular without addition of water, is heated above 95°C in reflux, in order to at least partially decompose the sodium carbonate into sodium hydroxide and carbon dioxide, and in a second substep, the sodium hydroxide is washed out with a solvent, especially water. Remaining sodium carbonate can be used again in the first substep.

Specifically, for example, in the first substep, the sodium carbonate, e.g. precipitated from caustic soda in step a), is preferably heated above 95°C, preferably in reflux, preferably without adding water, whereby preferably the water of crystallisation and part of the carbon dioxide are released. This produces caustic soda, which collects on the surface of remaining sodium carbonate crystals. This can prevent the further decomposition of sodium carbonate and the gas evolution is slowering down or ends. In the second substep, the sodium hydroxide is preferably dissolved with water, whereby the solution initially in particular has a high proportion of sodium carbonate. Sodium carbonate is only precipitated again as the concentration of sodium hydroxide in the solution increases. Care must be taken that the solution is not withdrawn until the sodium hydroxide concentration corresponds to the desired concentration suitable for step a). The desired final concentration of the sodium hydroxide solution is preferably controlled by the amount of water added. The caustic solution is preferably extracted from the spaces between the crystals. The remaining sodium carbonate is preferably heated again to decompose further sodium carbonate. Used sodium carbonate is replenished to achieve a constant product quantity.

Procedure I of the second step b) can also be executed in a continuous way, e.g. with water.

Thereby, preferably, the solid sodium carbonate, e.g. precipitated sodium carbonate in solid form, is heated above 95 °C, preferably to 95 °C to 110 °C in a reaction vessel, in particular in a column, in order to at least partially decompose sodium carbonate into sodium hydroxide and carbon dioxide, wherein water is added, especially from above, to the sodium carbonate in order to at least partially dissolve the sodium hydroxide to form caustic soda, wherein the caustic soda is collected at the bottom of the reaction vessel.

In particular, in this case, solid sodium carbonate is preferably filled into a column heated preferably to above 95 °C, more preferably between 95 °C to 110 °C, and charged with water, preferably drop by drop from above. Some of the water preferably evaporates and, together with carbon dioxide released from the decomposition of sodium carbonate, goes out of the column, preferably into a cooler above, where the water condenses. Carbon dioxide passes through the cooler and leaves the top, while the condensed water drips back onto the bed. The hot water passes through the bed towards the bottom of the column and dissolves sodium carbonate and caustic soda, which is the result of the decomposition of sodium carbonate. During the passage, more and more caustic soda is dissolved so that the solubility of sodium carbonate is successively exceeded in the increasingly concentrated caustic soda. Sodium carbonate dissolved at the top of the column therefore crystallizes again in the lower part of the column. At the bottom of the column, preferably a highly concentrated sodium hydroxide solution with a small amount of dissolved sodium carbonate finally emerges and is preferably collected in a container. When the solution cools down to ambient temperature, further sodium carbonate precipitates and is separated. The remaining sodium hydroxide solution is preferably fed to step a).

Further preferred, the solid sodium carbonate is mixed with an inert carrier material to improve the permeability of the sodium carbonate, especially the bed of the particulate sodium carbonate.Also, a pressure in the reaction vessel can be controlled to control a flow rate of the sodium hydroxide and therewith controlling the concentration of the caustic soda.

For example, an underpressure, especially a slight vacuum, can be applied constantly or intermittently at the bottom of the column to accelerate the flow rate of the solution through the bed of the particulate sodium carbonate, or conversely, a positive pressure can be applied to slow down the flow rate of the solution. In this way, preferably the residence time in the bulk can be adjusted to obtain the desired concentration of sodium hydroxide.

Fresh sodium carbonate is preferably applied to the top of the column as it is consumed, so that the height of the bulk remains preferably approximately constant. Typically, there is a pH gradient in the column, the pH value is lowest at the top and increases continuously towards the bottom of the column.

The decomposition and release of carbon dioxide preferably takes place in the upper part of the column. In the lower part, sodium carbonate is preferably separated from the solution. Therefore, an increase in the volume of the solid is observed in the lower part of the column. The increase in volume can exert a pressure on the bulk from below and can pushes some of the sodium carbonate upwards, so that in one section of the column there is a slow movement of the bulk.

In order to avoid strong compression in the lower section, the column can advantageously be made conical so that the diameter of the bed widens towards the top. To prevent clogging of the column, stirrers or vibrating elements can be provided to loosen up the bulk in the area of the sodium carbonate separation.

Procedure I of the second step b) can also be executed in a discontinuous manner with alcohol. Thereby, in particular, the steps of carbon dioxide release and extraction of the resulting sodium hydroxide solution are carried out separately one after the other in the process with alcohol.

For this purpose, in the first step, sodium carbonate precipitated from caustic soda is preferably heated above 95°C in reflux without adding water, whereby preferably the water of crystallisation and part of the carbon dioxide are released. This produces caustic soda, which collects on the surface of the remaining sodium carbonate crystals. This prevents further decomposition of sodium carbonate and the gas evolution ends. In the second step, preferably washing is carried out with an aqueous solution comprising an alcohol, especially one or more of methanol, ethanol, propanol and butanol. The washing solution preferably dissolves sodium hydroxide and only small amounts of sodium carbonate. After washing, the decomposition process can be resumed preferably at temperatures above 95°C. Washing and decomposition are preferably alternated until the sodium carbonate is completely converted. The washing solution is preferably worked up by distillation, whereby the solvent is preferably recovered and the caustic soda with a small amount of sodium carbonate remains as a solid. This is absorbed into water to produce the desired concentration for absorption. This solution is again brought into contact with gas containing carbon dioxide in step a) to bind CO₂.

Furthermore, the procedure I of the second step b) can be executed in a continuous manner by washing out the sodium hydroxide with an the extraction agent, e.g. an aqueous alcoholic solution.

In particular, the sodium carbonate in solid form, especially precipitated sodium carbonate, in particular without addition of water, is heated to above 95°C in reflux, in order to at least partially decompose sodium carbonate into sodium hydroxide and carbon dioxide, and in parallel sodium hydroxide is washed out with the extraction agent, wherein, depending on the extraction agent used, a pressure is set in such a way that the boiling temperature of the extraction agent or the wash solution, respectively, is above 95 °C.

In particular, the continuous execution of the process usually requires that the boiling temperature of the wash solution is above the decomposition temperature of sodium hydrogencarbonate and therewith above 95°C. Since this is usually not the case with alcohols, the process according to the invention is preferably carried out under increased pressure, thereby raising the boiling point of the alcohol-water mixture so that extraction and decomposition take place simultaneously.

Preferably, aqueous solutions of the alcohols methanol and/or ethanol and/or propanol and/or butanol are used as extraction agent or washing solution, respectively.

The addition of alcohols to the washing water preferably reduces the solubility of sodium carbonate, the ratio of sodium hydroxide to sodium carbonate preferably increases, and sodium hydroxide can be washed out more selectively. The wash solution is preferably worked up by distillation, whereby the solvent is recovered and caustic soda with a proportion of sodium carbonate preferably remains as a solid residue. This is preferably absorbed in water and can be directly returned to an absorber for carbon dioxide absorption.

In this continuous process, the washing solution consisting of water and an alcohol, e.g. at least one of the alcohols methanol, ethanol, propanol or butanol, is preferably brought into contact with solid sodium carbonate under elevated pressure at a temperature above 95°C, whereby preferably CO₂ is released and sodium hydroxide is dissolved.

The NaOH-enriched washing solution preferably drips off and/or is drawn off and preferably worked up by distillation with recovery of the solvent. The solvent is preferably reused, sodium hydroxide with a proportion of sodium carbonate remains as a solid residue. This is absorbed in water and can preferably be fed directly back to step a).

The alcohol-water mixture preferably may be dropped from a storage tank over a column filled with sodium carbonate so that the solvent dissolves sodium hydroxide as it passes down the column. In a preferred embodiment, a column filled with sodium carbonate is preferably placed in a closed pressure vessel, preferably under a cooling device so that the condensate drips onto the column. Heating is preferably applied to the bottom of the pressure vessel so that the alcohol-water mixture evaporates, which preferably condenses on the cooling device above the column. In this way, the sodium hydroxide solution accumulates preferably with small amounts of sodium carbonate at the bottom of the pressure vessel. This solution can be continuously withdrawn for processing as described for the discontinuous process. Alternatively, the enrichment process can be continued at the bottom of the pressure vessel preferably until the solubility product is exceeded and solid sodium hydroxide precipitates together with some solid sodium carbonate.

Summarizing, in the procedure I of the second step b) for the production of sodium hydroxide solution and release of carbon dioxide from sodium carbonate, the release of carbon dioxide from solid sodium carbonate is preferably effected by direct thermal decomposition, whereby the end product sodium hydroxide solution being removed by extraction to allow further decomposition.

In an alternative procedure II of step b), which is however not part of the invention, sodium carbonate obtained in the first step a) is provided as an aqueous solution and at least partially decomposed thermally by heating the aqueous solution, especially to a temperature below the boiling point of the aqueous solution, such that gaseous carbon dioxide is released, in particular by evaporation, from the solution.

Especially, the decomposition of sodium carbonate is carried out by heating or boiling the aqueous solution of the sodium carbonate to temperatures around the boiling point of the solution, preferably at normal pressure.

It is known that sodium carbonate, when dissolved in water, reacts with sodium hydrogencarbonate and sodium hydroxide according to the following chemical equilibrium reaction :
-

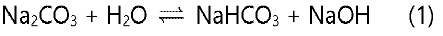

The method of procedure II provides for the thermal decomposition of the sodium hydrogencarbonate available in equilibrium (1) where the carbon dioxide is continuously removed.

Equilibrium reaction 2 shows the formation of caustic soda and carbonic acid from sodium hydrogencarbonate. Equilibrium reaction 3 shows the thermal decomposition or the spontaneous decomposition of carbonic acid to carbon dioxide.

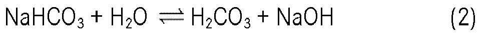

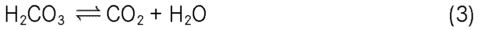

In order to shift the equilibrium reaction 2 in the direction of the products, one or both of the reaction products can be continuously removed from the equilibrium.

Specifically, the continuous removal of carbonic acid is achieved by heating and/or boiling the sodium carbonate solution.

Although not necessary, the formation of bubbles of water vapour at the bottom of a bottom-heated reaction vessel can make a significant contribution to the removal of carbon dioxide from the solution.

Many small bubbles with a large surface area and long residence time of the bubbles in the solution improve the discharge. The water vapour is condensed again at the vessel head, preferably with heat recovery, and pure carbon dioxide is released. Pure carbon dioxide (moist) is preferably extracted from the gas phase and can then be dried and processed further.

From equilibrium reaction 2, it can be seen that when the sodium carbonate solution is boiled out, the NaOH concentration and thus the pH value of the solution increases steadily. This promotes the back reaction to sodium carbonate according to equilibrium reaction 1. If the pH value or the sodium ion concentration is too high, no further carbon dioxide can be released by boiling.

Thus, preferably, in order to drive the decomposition further, the NaOH concentration can be lowered. Three process options for lowering the sodium hydroxide concentration in the sodium carbonate solution are described in the following. These methods can be used separately or in combination.

According to a first preferred option, the solution obtained during the thermal decomposition is diluted with water in order to promote the decomposition of the sodium carbonate. Thereby, it is possible to provide an appropriately diluted sodium carbonate solution in the heating and/or boiling process. Also, it is possible to use a more concentrated sodium carbonate solution and successively diluting the solution during the heating and/or boiling process. This will prevent the carbon dioxide evolution from stopping.

With both variants, the percentage of conversion can be controlled by the final dilution. The diluted solution contains mainly caustic soda and residues of sodium carbonate and is suitable after concentration, for example by distillation or reverse osmosis, for direct reuse in step a).

It could be shown that in the heating and/or boiling process with dilution, a quarter to a third of the carbon dioxide bound in the sodium carbonate can be released. Instead of further dilution, it is possible at this point to concentrate the solution again, whereby sodium carbonate precipitates again due to its poor solubility in the remaining caustic soda. This sodium carbonate is then dissolved again in water and, together with further sodium carbonate reintroduced back into the heating and/or boiling process. In total, therefore, for each heating and/or boiling cycle, one quarter to one third of the sodium carbonate is converted into caustic soda and carbon dioxide.

According to a second preferred option, an acidic ion exchanger resin especially a weakly acidic ion exchanger resin is added to the solution, in order to reduce the sodium ion concentration and therewith to promote the decomposition of the sodium carbonate. Thereby, for reducing the sodium ion concentration, preferably weakly acidic ion exchange resins are used.

Commercially available weakly acidic ion exchange resins that are preferably completely saturated with sodium ions, release some of the sodium ions in distilled water. In solutions with high concentrations of sodium ions, they are able to take up sodium ions again. This effect is used to bind sodium ions from the sodium carbonate solution enriched with caustic soda. The eluate which is produced during the partial regeneration of the weakly acidic ion exchanger with water is preferably concentrated. The resulting sodium hydroxide solution is preferably recycled in step a).

In a preferred embodiment, this option uses a hot saturated sodium carbonate for the heating and/or boiling process. The solution is converted by the heating and/or boiling process to preferably about one quarter. Then the solution is preferably brought into contact with the weakly acidic cation exchanger, and preferably sodium ions are bound by the ion exchanger.

Afterwards the solution can preferably be immediately subjected to a heating and/or boiling process again, whereby further carbon dioxide is released. Depending on the amount of ion exchanger resin used and the number of repetitions, almost complete decomposition is possible. However, it is also possible to stop the process after one or more applications of the ion exchange resin and concentrate the solution instead. After separation of the mother liquor, the sodium carbonate precipitated in the process is preferably reused in the decomposition process.

The ion exchanger resin is then preferably brought into contact with distilled water for partial regeneration, whereby a part of the sodium ions bound to the ion exchanger is dissolved in the water. The released ion exchange resin are occupied by protons from the water dissociation. The partially regenerated weak acid cation exchanger is preferably used again.

According to a third preferred option, an amphoteric metal compound, in particular an amphoteric metal oxide and/or an amphoteric metal hydroxide, is added to the solution, in order to reduce the sodium ion concentration and therewith to promote the decomposition of the sodium carbonate.

Amphoteric metal oxides and amphoteric metal hydroxides are insoluble in water, but can be dissolved in sodium hydroxide solution. In doing so, they bind dissolved sodium ions, the pH value is lowered and the formation of sodium carbonate is promoted. The equilibrium of reaction equation 1 is shifted to the right in the direction of sodium hydrogencarbonate. The amphoteric compounds dissolved in sodium hydroxide solution dissolved can be precipitated and hydrolyzed in a simple and energy-saving way to realize a cycle process - in contrast to protonic acids which form sodium salts as a reaction product.

Numerous amphoteric compounds are known. Especially preferred are aluminium hydroxide, zinc hydroxide and/or silicon dioxide. These substances are preferred inter alia due to their good availability and non-toxicity. However, other amphoteric compounds can be used as well. However, preferably, the amphotheric metal compound used is one or more of aluminium hydroxide, zinc hydroxide, silicon dioxide.

Preferably the metal hydroxides are aluminium hydroxide Al(OH)₃ and/or zinc hydroxide Zn(OH)₂. It is also possible to use the hydroxides in the sodium carbonate solution directly from the oxides. The amphoteric metal hydroxides bind sodium ions from the solution and thereby form sodium hydroxometallates e.g. sodium tetrahydroxoaluminate, Na[Al(OH)₄]) and sodium tetrahydroxozincate Na₂[Zn(OH)₄]. The formation of the complexes causes the pH value and concentration of free sodium ions to be lowered, which promotes and accelerates the decomposition of the sodium carbonate. The destruction of the complexes after the release of the carbon dioxide takes place by precipitation and/or hydrolysis. The solid hydroxides being separated from the diluted sodium hydroxide solution. The remaining solution can be concentrated and reused in step a).

A typical embodiment of the process using of amphoteric hydroxides starts from a preferably hot concentrated sodium carbonate solution to which preferably one or more amphoteric metal hydroxides are added. The more sodium hydroxide is produced, the more amphoteric hydroxides go into solution. Due to the binding of the sodium ions in the complexes formed, they are no longer available for binding the carbonates and a larger proportion of sodium carbonate can be decomposed during boiling. However, since the solubility of the sodium complexes is also limited, complete conversion is not achievable, preferably a doubling of the carbon dioxide release compared to the pure heating and/or boiling process without additives is, however, well achievable. By combining amphoteric compounds, the conversion can be further advanced. Since the solubility of the complexes formed shows a strong dependence on temperature, the majority of the hydroxides used can be precipitated again preferably by cooling the solution.

Thus, preferably, the sodium hydroxide solution obtained after releasing the carbon dioxide is concentrated and reused in step a).

Further purification of the sodium hydroxide solution before returning it to step a) is possible. However, small residues do not affect the absorption in the concentrated sodium hydroxide solution and are preferably partly precipitated with the sodium carbonate formed during absorption.

Summarizing, when following procedure II in step b), a process for the recovery of carbon dioxide from a gas comprising carbon dioxide, in particular from air or exhaust gas, by absorption in sodium hydroxide solution and release of the CO₂ from the sodium carbonate formed is disclosed, where in particular:
- concentrated sodium hydroxide solution is used in step a), so that sodium carbonate precipitates due to the exceeding of the solubility in the concentrated sodium hydroxide solution during absorption or that dilute sodium hydroxide solution is used and the solution is concentrated until sodium carbonate precipitates.
- the sodium carbonate obtained in step a) is dissolved in water and the carbon dioxide is at least partially thermally decomposed and released by heating and/or boiling in step b).
- The remaining solution optionally is concentrated and returned to step a).

In a further variant, however not part of the invention, when following a procedure III of step b), an absorption process for capturing carbon dioxide from gas comprising carbon dioxide, in particular from air or exhaust gas, for the recovery of carbon dioxide by means of absorption in sodium hydroxide solution, with subsequent electrochemically driven disproportionation and thermal decomposition is proposed.

Especially, when following procedure III of step b), sodium carbonate obtained in step a) is converted by disproportionation to sodium hydrogencarbonate and caustic soda in an electrochemical device.

In particular, the sodium carbonate obtained in the first step a) is at least partially separated by ion-selective membranes into sodium hydrogencarbonate and sodium hydroxide, wherein the obtained sodium hydrogencarbonate in a third step is at least partially thermally decomposed into carbon dioxide and sodium carbonate. Thereby, the sodium carbonate used in step b) in particular is provided in the form of an aqueous solution.

The caustic soda or sodium hydroxide, respectively, obtained in the second step can be fed to step a) again, whereas the electrochemically produced sodium hydrogencarbonate can be decomposed thermally at temperatures up to 200°C to sodium carbonate, carbon dioxide and water. The obtained sodium carbonate produced in the third step can again be subjected to the electrochemically driven disproportionation.

Especially, in this approach the electrochemical treatment is only used for the disproportionation of sodium carbonate to sodium hydrogencarbonate and sodium hydroxide. Sodium hydrogencarbonate obtained in this way is then heated in a known manner at low temperatures (e.g. at temperatures from 50°C to 200°C, preferably from solar heat or waste heat).

The disproportionation of sodium carbonate to sodium hydroxide solution and sodium hydrogencarbonate already takes place when the sodium carbonate is dissolved in water (equation 4):

Na₂CO₃ + H₂O → NaHCO₃ + NaOH (4)

The aim of electrochemical processing is therefore to separate the products of the disproportionation from each other and from the starting product. The separation preferably takes place in an ion-selective membrane arrangement.

Especially, the ion-selective membrane arrangement is a membrane-capacitive arrangement where preferably at least a cathode cell, a middle cell and an anode cell are separated from each other by a cation-selective membrane.

In particular, the membrane-capacitive arrangement comprises a cathode cell, a middle cell and an anode cell, each of the cells being separated from each other by a cation-selective membrane, whereby the middle cell is charged with an aqueous solution of sodium carbonate of the first step, the cathode cell and the anode cell are fed with a slurry of water and conductive particles, especially carbon particles. In operation, a voltage is applied via electrodes such that the conductive particles in the cathode cell have a negative charge in order to adsorb sodium ions of the middle cell and the carbon particles in the anode cell have a positive charge in order to adsorb hydroxide ions, wherein the process is controlled such that mainly sodium hydrogencarbonate is formed in the middle cell.

Preferably a membrane-capacitive depletion of sodium ions from a central cell, which is separated on two opposite sides by a cation-selective membrane of flow-through electrodes, takes place. The flow-through anode and the flow-through cathode preferably each consist of a chamber which is charged with a slurry of conductive particles in water. The flow-through anode is preferably connected to the positive pole of a voltage source via a conductive contact surface in the anode chamber and the flow-through cathode is connected to the negative pole of the voltage source via a conductive contact surface in the cathode chamber.

After passing through the electrode chambers, the carbon slurry of the two electrode chambers is preferably combined for discharging the carbon particles and releasing caustic soda.

Specifically, the cathode cell and the anode cell are preferably charged with a slurry of water and conductive carbon particles, preferably with a large surface area. This slurry is preferably subjected to an electrical voltage via electrodes, so that the carbon particles in the cathode cell have a negative charge and the carbon particles in the anode cell have a positive charge.

The voltage is preferably adjusted in such a way that no gas development occurs at the electrodes in order to avoid the undesirable side reaction of water electrolysis. The charges on the surface of the conductive particles, especially carbon particles, are at least partially neutralized in the cathode cell by sodium ions migrating from the center cell via the cation-selective membrane (capacitive charging).

In the anode cell, the positive charges on the surface of the carbon particles are at least partially neutralized by hydroxide ions, which originate from the dissociation of water: H₂O → H⁺ + OH⁻

Protons from the dissociation, driven by the electric field to balance the charge, migrate through the cation-selective membrane into the middle cell.

Preferably, the slurry with conductive particles from the cathode cell, which is charged with sodium ions, is preferably combined with the slurry with conductive particles charged with hydroxide ions outside the arrangement.

This produces a sodium hydroxide solution, which, preferably after sedimentation of the conductive particles, is used again in step a).

An adjustment of the concentration of the sodium hydroxide solution can be carried out.

The conductive particles are preferably separated from the caustic soda by sedimentation or filtration, re-slurried in water and fed to the electrodes, especially the flow-through electrodes and/or the edge cells again.

The residence time of the solution in the middle cell is preferably regulated in such a way that preferably just 50% of the sodium is removed from the middle cell. This corresponds to a complete conversion to sodium hydrogencarbonate. A further withdrawal of sodium from the center cell would cause a direct release of carbon dioxide in the center cell, which is preferably not desired. The amount of electrical energy required would increase dramatically, and the residence time in the cell would be much longer.

Sodium hydrogencarbonate can preferably partially precipitate or form a suspension in the center cell due to its low solubility. This effect must preferably be taken into account in the geometric design of the middle cell. If the velocity in the middle cell is too high for a complete adjustment of the solubility equilibrium, preferably a reservoir should be provided downstream of the electrochemical cell in which further sodium hydrogencarbonate precipitates until the equilibrium is adjusted. The solid is preferably filtered or centrifuged off, the remaining mother liquor is preferably used to dissolve further sodium carbonate from step a), and preferably pumped back into the central cell. The dry sodium hydrogencarbonate can be subjected to thermal decomposition directly and/or after any intermediate storage.

In another variant, the ion-selective membrane arrangement is an electrodialysis arrangement, especially comprising exclusively cation-selective membranes. In particular, electrodialysis can be used to deplete sodium ions. In contrast to membrane capacitive enrichment, which is operated in such a way that preferably no water electrolysis occurs at the electrodes, in the electrodialysis arrangement, water electrolysis is preferably operated at the edge electrodes, whereby hydrogen and oxygen are produced.

Especially the electrodialysis arrangement comprises several cation-selective membranes inserted between an anode and a cathode, each membrane separating neighboring cells that are charged alternatingly with water and sodium carbonate, such that cells in which sodium hydroxide is formed alternate with cells in which sodium hydrogencarbonate is formed.

The anode and cathode cells (edge cells with the electrodes) are preferably filled with an electrolyte, e.g. sodium sulphate solution, to ensure good conductivity for electrolysis. To compensate for the loss of sodium ions in the anode cell and the accumulation of sodium ions in the cathode cell, anolyte and catholyte are preferably continuously pumped in a circle and mixed.

The actual depletion preferably takes place in cells separated from each other by ion-selective membranes between the anode and the cathode. Sodium ions migrate preferably through a cation-selective membrane from a cell charged with sodium carbonate solution towards the cathode.

In contrast to classical electrodialysis, where cation-selective membranes alternate with anion-selective membranes, preferably only cation-selective membranes are used here, which prevent the migration of the carbonate ions towards the anode.

Preferably electrodialysis is used to remove the sodium ions from the sodium carbonate solution. Specifically, in a preferred variant, the particular electrodialysis arrangement has only cation-selective and no anion-selective membranes between the hydrogen and oxygen producing electrodes. Cells charged with water are preferably arranged between the cells charged with sodium carbonate solution, which take up sodium ions from the neighbouring cells and release protons from the dissociation of the water to the next neighbouring cell.

Preferably, a plurality of membranes can be inserted between the two electrodes, the applied potential is preferably controlled at a constant current so that a constant electrolysis power, which does not exceed the loading capacity of the edge electrodes, takes place.

Especially a number of cation-selective membranes are inserted between the anode and cathode, each separating cells that can be charged separately. Every second cell is preferably charged with water, where the sodium ions migrate from the adjacent cell charged with sodium carbonate towards the anode and hydroxide ions are formed from the dissociation of water. These cells preferably release protons via the next cation-selective membrane to the neighbouring cell in the direction of the cathode, which was again charged with sodium carbonate, resulting in charge equalisation. Thus, cells in which sodium hydroxide is formed alternate with cells in which sodium hydrogencarbonate is formed.

The cells are preferably charged with water in countercurrent to the direction of flow of the sodium carbonate-sodium hydrogencarbonate solution.

The number of cells preferably depends on the available voltage or the demand for hydrogen, there is no theoretical limit. The concentration of the caustic soda produced in this process is limited. If the sodium hydroxide solution is too concentrated, then instead of the protons, predominantly sodium ions migrate from the alkaline solution into the next cell which was charged with sodium carbonate and the efficiency decreases considerably.

However, it is possible to obtain sodium hydroxide solution in this way, which is concentrated by removing water before it is used as an absorbent. The variant of the special electrodialysis can be used advantageously especially when there is a demand for hydrogen anyway, e.g. for a subsequent reduction of carbon dioxide. Since the solubility of sodium hydrogencarbonate is lower than that of sodium carbonate, part of the sodium hydrogencarbonate formed precipitates and can preferably be filtered or centrifuged off in order to recover the product as a solid in a particularly energy-saving way.

Since the solubility equilibrium is not established so quickly, a container should be provided downstream of the electrochemical cells in which further sodium hydrogencarbonate precipitates until the equilibrium is established. The solid is filtered or centrifuged off, the remaining mother liquor is used to dissolve new sodium carbonate from step a), and pumped back into the cells. Alternatively, the collected sodium hydrogencarbonate solutions and/or suspensions can simply be dried.

The solid sodium hydrogencarbonate obtained with procedure III can be stored temporarily, or used directly as a product, or as a starting product, for example for an electrochemical reduction of carbonate. When free carbon dioxide is needed, the third step can be performed.

In the third step, sodium hydrogencarbonate produced in the second step is decomposed at a temperature below 350 °C, preferably below 250 °C, e.g. between 50 and 200 °C, more preferably between 90 °C and 200 °C, in a known manner, with release of carbon dioxide. Sodium carbonate produced in the third step cam be dissolved again and reused in the second step.

Preferably the solid sodium carbonate of step a) is temporarily stored before further processing in order to shift the energy requirement of the electrochemical process to times when electrical energy is available at low cost.

Preferably solid sodium hydrogencarbonate from the electrochemical process in step b) is temporarily stored until favourable thermal energy (solar heat, waste heat) is available for the decomposition, and it is intended to use the temporary storage of solid sodium hydrogencarbonate as a pressureless storage form for carbon dioxide. Thermal decomposition will preferably only take place when there is a demand for carbon dioxide.

Summarizing, when following procedure III in step b), a process for the recovery of carbon dioxide from a gas comprising carbon dioxide, in particular from air or exhaust gas, by absorption in sodium hydroxide and release of the CO₂ from sodium hydrogencarbonate formed is disclosed, whereby in particular:
- sodium hydroxide solution is brought into contact gas comprising carbon dioxide as an absorbent, whereby sodium carbonate is formed, which preferably precipitates due to the excess of the solubility product and is preferably recovered in solid form by sedimentation, filtration or centrifugation, filtration or centrifugation
- and preferably the sodium carbonate obtained is fed to an electrochemical apparatus where a depletion of sodium ions by up to preferably 50 wt.% takes place via ion-selective membranes in the electric field. This separates sodium hydrogencarbonate from sodium hydroxide, both of which are derived from the disproportionation of sodium carbonate;
- and the sodium hydroxide obtained in the electrochemical apparatus is preferably returned to step a). An increase in the concentration of the sodium hydroxide solution can take place before the recycling;
- and preferably the dried sodium hydrogencarbonate, is used directly as a product or is thermally decomposed, whereby carbon dioxide is released as a product of the process in high concentration;
- and the sodium carbonate resulting from the thermal decomposition is preferably returned to the electrochemical apparatus for disproportionation into sodium hydroxide and sodium hydrogencarbonate.

A further variant not part of the present invention is directed to an apparatus, especially a carbon dioxide sorption unit or absorption unit, for carrying out a method as described above. In particular, the apparatus is configured for capturing at least 200'000 tons CO₂ per year, preferably at least 500'000 tons CO₂ per year.

Preferably, the apparatus comprises an absorber that is configured for performing step a) and a decomposition unit that is configured for performing step b) of the inventive method.

Especially, the apparatus is connected to a source of solar thermal heat and/or waste heat and/or the apparatus comprises a solar thermal collector for producing heat to be used in the inventive method.

Preferably, the apparatus further comprises a methanol synthesis unit, which is configured for producing methanol from the carbon dioxide captured with the inventive method and hydrogen.

Further preferred, the apparatus further comprises a carbonation unit for producing carbon (C) from the capture carbon dioxide and hydrogen, especially the carbonation unit is a Bosch reaction unit that is configured for performing a Bosch reaction. Preferably, the hydrogen is produced with an electrolysis unit that is driven by solar energy.

According to a highly preferred variant, the apparatus is part of a plant, in particular a power station.

Another variant not part of the invention is related to a plant, in particular power station, for reducing the carbon dioxide content in atmospheric air, in particular for the reduction of the carbon dioxide content in atmospheric air and proportionately in water, preferably sea water, comprising:
- at least one electrolysis unit for oxygen production, which is connected to at least one water supply line for receiving a quantity of water (M_{H2O}) and is adapted to supply an absorbed amount of water (M_{H2O}) by electrolysis into an electrolysis into a partial quantity of oxygen (M_{O2}) and a partial quantity of hydrogen fraction;
- at least one hydrogen transport device, connecting the electrolysis unit to a carbonation unit for carbon synthesis unit for carbon synthesis, in particular a Bosch reaction unit;
- at least one carbon dioxide sorption unit, especially as described above, which is configured for the purification of ambient air of an external atmosphere surrounding the unit, at least one air inlet for supplying the ambient air and the ambient air and at least one downstream sorbent device which is adapted to extract a quantity of carbon dioxide from the ambient air according to the inventive method for capturing carbon dioxide as described above; and
- at least one carbon dioxide transport means, which connects the carbon dioxide sorption unit with the carbonation unit, wherein said electrolysis unit having at least one oxygen outlet for discharging the oxygen fraction (M_{O2}) and the carbon dioxide sorption unit has at least one air outlet discharging purified ambient air, wherein the oxygen outlet and the air outlet opening into the outside atmosphere, the carbonation unit having a carbon outlet for removing carbon for the removal of carbon, and wherein at least one power generation unit for the self-sufficient power supply power supply of the plant is provided, which, for power generation one or more, in particular exclusively regenerative energy sources for power generation.

Accordingly, a further variant not part of the invention is a method, especially for operating a plant as described above, in which:
- at least one electrolysis unit for oxygen production takes up a quantity of water (M_{H2O}) through at least one water supply line and the quantity of water (M_{H2O}) taken up by electrolysis is broken down into an oxygen subset (M_{O2}) and a hydrogen subset;
- the hydrogen subset is at least partially conducted by at least one hydrogen transport device to a carbonization unit, in particular a Bosch reaction unit;
- ambient air of an external atmosphere, especially the atmosphere surrounding the plant, is cleaned by at least one carbon dioxide sorption unit, the ambient air being fed through at least one air inlet to a downstream sorber device and then by the sorber device a quantity of carbon dioxide being removed from the fed in ambient air is extracted according to the inventive method as described above; and
- the amount of carbon dioxide is passed through at least one carbon dioxide transport device to the carbonation unit, wherein the oxygen portion (M_{O2}) and the purified ambient air are released into the outside atmosphere and the hydrogen portion and the amount of carbon dioxide in the carbonation unit to water, carbon and heat are converted, the system being self-sufficiently supplied with electricity from one or more, in particular exclusively, regenerative energy sources.

In particular, further features of the plant and the method can be implemented according to DE 10 2021 104 746 B3.

Another variant not part of the invention is directed to a facility for producing a globally usable energy carrier, comprising:
- a photovoltaic unit for converting solar energy into power, said photovoltaic unit having an output, in particular a peak output, of at least 1.0 gigawatt, in particular at least 1.3 gigawatt, in particular at least 1.5 gigawatt,
- a water supply unit, in particular a seawater desalination unit for producing desalinated water, said water supply unit having a holding capacity of at least 900000 tons of seawater per year,
- an electrolysis unit for producing hydrogen, said electrolysis unit being connected to the water supply unit, in particular the seawater desalination unit, by means of at least one pipeline in order to be supplied with water, in particular desalinated water,
- a carbon dioxide absorption unit, especially as describe above, which is configured for absorbing carbon dioxide from the surrounding air, said absorption unit having an extraction power of at least 600000 tons of carbon dioxide per year from the surrounding air and said absorption unit being configured for performing the inventive method as described above, and
- a methanol synthesizing unit for producing methanol, said methanol synthesizing unit being connected to the electrolysis unit by means of at least one pipeline in order to be supplied with hydrogen and to the carbon dioxide absorption unit by means of at least one pipeline in order to be supplied with carbon dioxide, wherein the water supply unit, in particular the seawater desalination unit, the electrolysis unit, the carbon dioxide absorption unit, and the methanol synthesizing unit are each connected to the photovoltaic unit in order to be supplied with power and are arranged in a region of the facility connected to the photovoltaic unit; the photovoltaic unit is adapted so as to absorb at least 1500 kWh/m²a, in particular at least 2000 kWh/m²a, in particular at least 2300 kWh/m²a, in particular at least 2500 kWh/m²a, in particular at least 2700 kWh/m²a, of solar power; and the methanol synthesizing unit has an output capacity of at least 300000 tons, in particular at least 450000 tons, of regeneratively produced methanol per year.

Accordingly, a further variant not part of the invention is a method, especially for the production of a globally usable energy carrier, especially implemented with the above described facility, in which:
- a photovoltaic unit for the conversion of solar energy into electricity with a power, in particular peak power of at least 1.0 gigawatt, in particular at least 1.3 gigawatt, in particular at least 1.5 gigawatts at least 1500 kWh/m2a, in particular at least 2000 kWh/m2a, in particular at least 2300 kWh/m2a, in particular at least 2500 kWh/m2a, in particular at least 2700 kWh/m2a of solar energy,
- a water supply unit, in particular seawater desalination unit for the production of desalinated water takes up at least 900000 tons of sea water per year, desalinated and supplied with electricity by the photovoltaic unit,
- an electrolysis unit for the production of hydrogen, which is connected through at least one pipeline from the water supply unit, in particular desalination unit with water, in particular with desalinated water, and from the photovoltaic unit with electricity,
- a carbon dioxide absorption unit for the absorption of carbon dioxide from the ambient air according to the inventive method for capturing carbon dioxide as described above, which extracts at least 400000 tons of carbon dioxide per year, in particular at least 600000 tons of carbon dioxide per year, from the ambient air and is supplied with electricity by the photovoltaic unit;
- a methanol synthesis unit for the production of methanol, which is supplied by at least one pipeline from the electrolysis unit with hydrogen, through at least one pipeline from the unit with carbon dioxide and from the photovoltaic unit with electricity and at least 300000 tons, in particular at least 450000 tons of regeneratively produced methanol per year.

In particular, further features of the facility and the corresponding method can be implemented according to WO 2022/096615 A1.

With the above described plant, the above described facility and the corresponding methods, the carbon dioxide (ab)sorption units and the sorber units are configured for performing the inventive method for capturing carbon dioxide. Thereby, in particular, the carbon dioxide (ab)sorption units and the sorber units are connected to a source of solar thermal heat and/or waste heat.

### Brief description of the drawings

The drawings used to explain the disclosure show:
- Fig. 1: a flow diagram of the process for directly capturing carbon dioxide from a gas comprising carbon dioxide, in particular from air or exhaust gas;
- Fig. 2: a sketch of the membrane-capacitive process for the disproportionation of sodium carbonate;
- Fig. 3: a sketch of the alternative export of the disproportionation of sodium carbonate by means of special electrodialysis.

In the figures, the same components are given the same reference symbols.

### Preferred embodiments

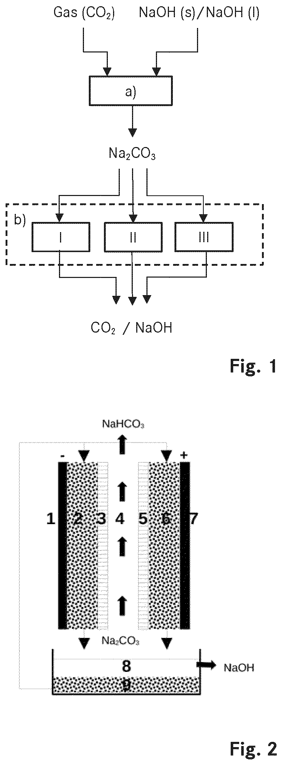

Figure 1 shows a flow diagram of the process for directly capturing carbon dioxide from a gas comprising carbon dioxide, in particular from air or exhaust gas.

In the first step a), the gas comprising carbon dioxide (CO₂) is brought into contact with sodium hydroxide (NaOH), e.g. a sodium hydroxide solution and/or solid sodium hydroxide, to absorb the carbon dioxide. During step a), sodium carbonate (Na₂CO₃) is formed. Depending on the specific implementation of step b), the sodium carbonate is provided as a solid (procedure I) or in the form of an aqueous solution (procedures II and III).

In the a second step b), gaseous carbon dioxide and diluted sodium hydroxide solution, especially a solution of sodium hydroxide, are formed at a temperature below 350 °C, preferably below 250 °C, e.g. between 50 and 200 °C, more preferably between 90 °C and 200 °C, out of the obtained sodium carbonate obtained in the first step a) and/or out of sodium hydrogencarbonate converted from the obtained sodium carbonate obtained in the first step a). Thereby, step b) can be carried out according to at least one of the procedures I, II and/or III, where procedures II and III are not part of the present invention.

In procedure I, the sodium carbonate obtained in step a) is used in the solid state and at least partially decomposed thermally, e.g. at a temperature of 90 °C and 200 °C, whereby gaseous carbon dioxide is released. The additional sodium hydroxide obtained by the thermal decomposition is extracted, especially parallel to the thermal decomposition of the sodium carbonate, by an extraction agent, e.g. water or an aqueous solution of alcohols.

In procedure II (not part of the invention), the sodium carbonate obtained in step a) is used in the form of an aqueous solution, which is at least partially decomposed thermally by heating the aqueous solution, especially to a temperature below the boiling point of the aqueous solution, such that gaseous carbon dioxide is released from the solution.

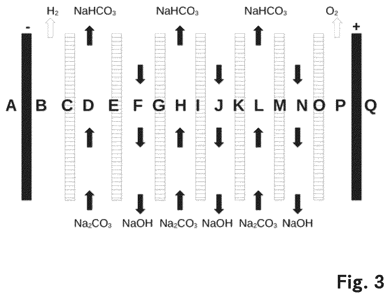

In procedure III (not part of the invention), the sodium carbonate obtained in step a) is used in the form of an aqueous solution and at least partially separated by an ion-selective membrane arrangement into sodium hydrogencarbonate and sodium hydroxide, wherein the obtained sodium hydrogencarbonate in a third step is at least partially thermally decomposed into carbon dioxide and sodium carbonate. In Figures 2 and 3 two exemplary variants of ion-selective membrane arrangements are shown.

Figure 2 shows a sketch of a membrane-capacitive arrangement and process for the disproportionation of sodium carbonate that can be used in procedure III. Thereby, a concentrated sodium carbonate solution (Na₂CO₃ in water) is introduced into the centre cell 4 at one end and pumped in countercurrent flow to a slurry of conductive activated carbon particles flowing through a cathode cell 2 and an anode cell 6. The centre cell 4 is confined by two cation-selective membranes 3 and 5. Sodium ions migrate through the membrane 3 into the cathode cell 2, protons from the anode cell 6 migrate through the membrane 5 into the centre cell 4. The cathode cell 2 is confined on the outside by an edge electrode 1 made of a conductive material such as carbon or stainless steel, which is conductively connected to the negative pole of a current source (not shown). The anode cell 6 is bounded on the outside by an edge electrode 7 which is conductively connected to the positive pole of an external current source. The A slurries of conductive activated carbon are pumped through the anode and cathode cells 2, 6 in countercurrent flow to the centre cell 4.

The charge of the activated carbon particles applied via the edge electrode 1 is neutralised in the cathode cell 2 by sodium ions migrating from the centre cell 4 via the cation-selective membrane 3. In the anode cell 6, the positive charge of the activated carbon particles applied by the edge electrode 7 is balanced by hydroxide ions from the dissociation of water. The protons released in this process migrate in the electric field through the cation-selective membrane 5 into the middle cell 4.

After passing through the cathode cell 2 or the anode cell 6, the carbon slurry of the two cells is combined outside the cell, whereby sodium hydroxide is formed in a neutralisation reaction after the electric field is removed. The carbon particles are discharged in the process. The discharged carbon particles 9 are separated from the caustic soda 8 by filtration or sedimentation, the carbon particles 9 are slurried with fresh water and returned to the cells 2 and 6. The caustic soda 8 is added to the absorption unit in step 1 of the process.

Figure 3 shows is a sketch of the alternative variant for the disproportionation of sodium carbonate by means of a special kind of electrodialysis. The electrodialysis is driven by an external voltage with the negative pole applied to electrode A (cathode) and the positive pole applied to electrode Q (anode). Cells B and P, in which the production of gaseous hydrogen and oxygen takes place, are preferably charged with a sodium sulphate solution, the solution in B and P being constantly mixed to compensate for the loss of sodium ions in the anode cell P and the accumulation of sodium ions in the cell B. The sodium sulphate solution in the anode cell P is mixed with the sodium sulphate solution in the anode cell Q.

Cation-selective membranes C,E,G,I,K,M,O are arranged between the electrodes. Theoretically, any number of membranes can be arranged between the electrodes, but in practice arrangements of up to 100 membranes are convenient to operate. Every second cell D,H,L is fed with a saturated sodium carbonate solution from step a). During the flow, the sodium concentration in the cells decreases so that only 50% of the sodium ions are present at the end of each cell. This converts the sodium carbonate into sodium hydrogencarbonate. The sodium ions migrate in the electric field towards the cathode A and pass the ion-selective membranes G,K,O, they migrate into the cells F,J,N which are charged with water. From the cells charged with water, protons migrate across the membranes E,I,M in the direction of the cathode A into the cells D,H,L. In the cells F,J,N charged with water, sodium hydroxide is formed in the flow-through, which is used for absorption in step 1 of the process after a possible concentration by water removal (evaporation, reverse osmosis).

## Claims

1. Method for capturing carbon dioxide from a gas comprising carbon dioxide comprising the following steps:
a) in a first step, the gas comprising carbon dioxide is brought into contact with sodium hydroxide to absorb carbon dioxide and to form sodium carbonate,
**characterized in that**
b) in a second step, gaseous carbon dioxide and sodium hydroxide are formed at a temperature below 350 °C out of the sodium carbonate obtained in the first step a) and/or out of sodium hydrogencarbonate converted from the sodium carbonate obtained in the first step a);
the second step being carried out according to the following procedure I:
I. the sodium carbonate obtained in the first step is provided in the solid state and at least partially decomposed thermally, whereby gaseous carbon dioxide is released and the sodium hydroxide obtained by the thermal decomposition is extracted.

2. Method according to claim 1, wherein the method further comprises a step of obtaining heat from a solar thermal collector, a solar thermal energy plant and/or waste heat and providing the heat in step b) for thermal decomposition of the sodium carbonate and/or the sodium hydrogencarbonate converted from the sodium carbonate obtained in the first step a).

3. Method according to any of preceding claims, whereby the sodium carbonate obtained in step a) is temporarily stored before it is subjected to step b).

4. Method according to any of preceding claims, wherein the sodium hydroxide obtained by the thermal decomposition in step b) is reused in step a).

5. Method according to any of preceding claims, whereby in step a) the gas comprising carbon dioxide is brought into contact with a sodium hydroxide solution.

6. Method according to any of preceding claims, whereby in step a) the gas comprising carbon dioxide is brought into contact with solid sodium hydroxide particles.

7. Method according to claim 6, whereby the solid sodium hydroxide particles are brought into contact with a gas comprising moisture and during and/or after formation of the aqueous caustic soda, the obtained caustic soda is brought into contact with the gas comprising carbon dioxide in order to produce the sodium carbonate in step a).

8. Method according to claim 7, whereby the solid sodium hydroxide particles are passed through a channel whereby a gas comprising moisture is guided through and/or introduced into the channel to form the aqueous caustic soda.

9. Method according to any of preceding claims, whereby water is used as extraction agent.

10. Method according to any of claims 1 - 8, whereby an aqueous solution of one or more water-soluble alcohols is used as extraction agent.

11. Method according to claim 9 or 10, wherein during and/or after the extraction, the extraction agent with sodium hydroxide dissolved therein is subjected to a separation process in order to recover sodium hydroxide and the extraction agent.

12. Method according to any of claims 9 - 11, wherein the sodium carbonate is heated above 95 °C in a reaction vessel in order to at least partially decompose sodium carbonate into sodium hydroxide and carbon dioxide, wherein water is added to the sodium carbonate in order to at least partially dissolve the sodium hydroxide to form caustic soda, wherein the caustic soda is collected at the bottom of the reaction vessel.

13. Method according to claim 12, wherein the solid sodium carbonate is mixed with an inert carrier material.

14. Method according to claim 12 or 13, wherein a pressure in the reaction vessel is controlled to control a flow rate of the caustic soda and therewith controlling the concentration of the caustic soda.

15. Method according to any of claims 9 - 11, wherein the sodium carbonate in solid form is heated to above 95°C in reflux, in order to at least partially decompose sodium carbonate into sodium hydroxide and carbon dioxide, and in parallel sodium hydroxide is washed out with the extraction agent, wherein, depending on the extraction agent used, a pressure is set in such a way that the boiling temperature of the extraction agent or the wash solution, respectively, is above 95 °C.

## Patentansprüche

1. Verfahren zur Abscheidung von Kohlendioxid aus einem kohlendioxidhaltigen Gas, wobei das Verfahren die folgenden Schritte umfasst:
a) in einem ersten Schritt wird das kohlendioxidhaltige Gas mit Natriumhydroxid in Kontakt gebracht, um Kohlendioxid zu absorbieren und Natriumcarbonat zu bilden,
**dadurch gekennzeichnet, dass**
b) in einem zweiten Schritt aus dem im ersten Schritt a) gewonnenen Natriumcarbonat und/oder aus Natriumhydrogencarbonat, das aus dem im ersten Schritt a) gewonnenen Natriumcarbonat umgewandelt wurde, bei einer Temperatur unter 350 °C gasförmiges Kohlendioxid und Natriumhydroxid gebildet werden;
wobei der zweite Schritt nach folgendem Verfahren I durchgeführt wird:
I. das im ersten Schritt gewonnene Natriumcarbonat wird in festem Zustand bereitgestellt und wenigstens teilweise thermisch zersetzt, wodurch gasförmiges Kohlendioxid freigesetzt und das durch die thermische Zersetzung gewonnene Natriumhydroxid extrahiert wird.

2. Verfahren nach Anspruch 1, wobei das Verfahren ferner einen Schritt umfasst, bei dem Wärme aus einem Solarthermiekollektor, einer Solarthermieanlage und/oder Abwärme gewonnen und die Wärme in Schritt b) zur thermischen Zersetzung des Natriumcarbonats und/oder des Natriumhydrogencarbonats bereitgestellt wird, das aus dem im ersten Schritt a) gewonnenen Natriumcarbonat umgewandelt wurde.

3. Verfahren nach einem der vorangehenden Ansprüche, wobei das in Schritt a) gewonnene Natriumcarbonat zwischengespeichert wird, bevor es Schritt b) unterzogen wird.

4. Verfahren nach einem der vorangehenden Ansprüche, wobei das durch die thermische Zersetzung in Schritt b) gewonnene Natriumhydroxid in Schritt a) wiederverwendet wird.

5. Verfahren nach einem der vorangehenden Ansprüche, wobei in Schritt a) das kohlendioxidhaltige Gas mit einer Natriumhydroxidlösung in Kontakt gebracht wird.

6. Verfahren nach einem der vorangehenden Ansprüche, wobei in Schritt a) das kohlendioxidhaltige Gas mit festen Natriumhydroxidpartikeln in Kontakt gebracht wird.

7. Verfahren nach Anspruch 6, wobei die festen Natriumhydroxidpartikel mit einem Feuchtigkeit enthaltenden Gas in Kontakt gebracht werden und während und/oder nach Bildung der wässrigen Natronlauge die gewonnene Natronlauge mit dem kohlendioxidhaltigen Gas in Kontakt gebracht wird, um in Schritt a) das Natriumcarbonat zu erzeugen.

8. Verfahren nach Anspruch 7, wobei die festen Natriumhydroxidpartikel einen Kanal durchlaufen, wobei das Feuchtigkeit enthaltende Gas durch den Kanal geleitet und/oder in diesen eingeleitet wird, um die wässrige Natronlauge zu bilden.

9. Verfahren nach einem der vorangehenden Ansprüche, wobei Wasser als Extraktionsmittel verwendet wird.

10. Verfahren nach einem der Ansprüche 1-8, wobei eine wässrige Lösung aus einem oder mehreren wasserlöslichen Alkoholen als Extraktionsmittel verwendet wird.

11. Verfahren nach Anspruch 9 oder 10, wobei das Extraktionsmittel mit dem darin gelösten Natriumhydroxid während und/oder nach der Extraktion einem Trennprozess unterzogen wird, um Natriumhydroxid und das Extraktionsmittel zurückzugewinnen.

12. Verfahren nach einem der Ansprüche 9-11, wobei das Natriumcarbonat in einem Reaktionsbehälter auf über 95 °C erhitzt wird, um Natriumcarbonat wenigstens teilweise in Natriumhydroxid und Kohlendioxid zu zersetzen, wobei dem Natriumcarbonat Wasser zugesetzt wird, um das Natriumhydroxid zur Bildung von Natronlauge wenigstens teilweise aufzulösen, wobei die Natronlauge am Boden des Reaktionsbehälters gesammelt wird.

13. Verfahren nach Anspruch 12, wobei das feste Natriumcarbonat mit einem inerten Trägermaterial vermischt wird.

14. Verfahren nach Anspruch 12 oder 13, wobei ein Druck im Reaktionsbehälter gesteuert wird, um eine Durchflussrate der Natronlauge und damit die Konzentration der Natronlauge zu steuern.

15. Verfahren nach einem der Ansprüche 9-11, wobei das Natriumcarbonat in fester Form unter Rückfluss auf über 95 °C erhitzt wird, um Natriumcarbonat wenigstens teilweise in Natriumhydroxid und Kohlendioxid zu zersetzen, und parallel dazu Natriumhydroxid mit dem Extraktionsmittel ausgewaschen wird, wobei je nach verwendetem Extraktionsmittel ein Druck derart eingestellt wird, dass die Siedetemperatur des Extraktionsmittels bzw. der Waschlösung über 95 °C liegt.

## Revendications

1. Procédé de capture de dioxyde de carbone à partir d'un gaz comprenant du dioxyde de carbone, comprenant les étapes suivantes :
a) dans une première étape, le gaz comprenant du dioxyde de carbone est mis en contact avec de l'hydroxyde de sodium pour absorber le dioxyde de carbone et former du carbonate de sodium,
**caractérisé en ce que**
b) dans une deuxième étape, du dioxyde de carbone gazeux et de l'hydroxyde de sodium sont formés à une température inférieure à 350 °C à partir du carbonate de sodium obtenu à la première étape a) et/ou à partir d'hydrogénocarbonate de sodium converti à partir du carbonate de sodium obtenu à la première étape a) ;
la deuxième étape étant réalisée selon la procédure suivante :
I. le carbonate de sodium obtenu à la première étape est fourni à l'état solide et au moins partiellement décomposé thermiquement, moyennant quoi du dioxyde de carbone gazeux est libéré et l'hydroxyde de sodium obtenu par la décomposition thermique est extrait.

2. Procédé selon la revendication 1, dans lequel le procédé comprend en outre une étape consistant à obtenir de la chaleur à partir d'un capteur solaire thermique, d'une centrale d'énergie solaire thermique et/ou de chaleur perdue et à fournir la chaleur à l'étape b) pour la décomposition thermique du carbonate de sodium et/ou de l'hydrogénocarbonate de sodium converti à partir du carbonate de sodium obtenu à la première étape a).

3. Procédé selon l'une quelconque des revendications précédentes, dans lequel le carbonate de sodium obtenu à l'étape a) est temporairement stocké avant d'être soumis à l'étape b).

4. Procédé selon l'une quelconque des revendications précédentes, dans lequel l'hydroxyde de sodium obtenu par la décomposition thermique à l'étape b) est réutilisé à l'étape a).

5. Procédé selon l'une quelconque des revendications précédentes, dans lequel, à l'étape a), le gaz comprenant du dioxyde de carbone est mis en contact avec une solution d'hydroxyde de sodium.

6. Procédé selon l'une quelconque des revendications précédentes, dans lequel, à l'étape a), le gaz comprenant du dioxyde de carbone est mis en contact avec des particules solides d'hydroxyde de sodium.

7. Procédé selon la revendication 6, dans lequel les particules solides d'hydroxyde de sodium sont mises en contact avec un gaz comprenant de l'humidité et pendant et/ou après la formation de la solution aqueuse de soude caustique, la soude caustique obtenue est mise en contact avec le gaz comprenant du dioxyde de carbone afin de produire le carbonate de sodium à l'étape a).

8. Procédé selon la revendication 7, dans lequel les particules solides d'hydroxyde de sodium sont acheminées à travers un canal, un gaz comprenant de l'humidité étant guidé à travers ledit canal et/ou introduit dans celui-ci afin de former la solution aqueuse de soude caustique.

9. Procédé selon l'une quelconque des revendications précédentes, dans lequel de l'eau est utilisée comme agent d'extraction.

10. Procédé selon l'une quelconque des revendications 1 à 8, dans lequel une solution aqueuse d'un ou plusieurs alcools solubles dans l'eau est utilisée comme agent d'extraction.

11. Procédé selon la revendication 9 ou 10, dans lequel pendant et/ou après l'extraction, l'agent d'extraction contenant de l'hydroxyde de sodium dissous dans celui-ci est soumis à un processus de séparation afin de récupérer de l'hydroxyde de sodium et l'agent d'extraction.

12. Procédé selon l'une quelconque des revendications 9 à 11, dans lequel le carbonate de sodium est chauffé à une température supérieure à 95 °C dans un récipient de réaction afin de décomposer au moins partiellement le carbonate de sodium en hydroxyde de sodium et en dioxyde de carbone, dans lequel de l'eau est ajoutée au carbonate de sodium afin de dissoudre au moins partiellement l'hydroxyde de sodium pour former de la soude caustique, dans lequel la soude caustique est recueillie au fond du récipient de réaction.

13. Procédé selon la revendication 12, dans lequel le carbonate de sodium solide est mélangé avec un matériau support inerte.

14. Procédé selon la revendication 12 ou 13, dans lequel une pression dans le récipient de réaction est contrôlée pour réguler un débit de la soude caustique et réguler ainsi la concentration de la soude caustique.

15. Procédé selon l'une quelconque des revendications 9 à 11, dans lequel le carbonate de sodium sous forme solide est chauffé à une température supérieure à 95 °C au reflux, afin de décomposer au moins partiellement le carbonate de sodium en hydroxyde de sodium et en dioxyde de carbone, et dans lequel, parallèlement, l'hydroxyde de sodium est extrait par lavage au moyen de l'agent d'extraction, dans lequel, en fonction de l'agent d'extraction utilisé, la pression est réglée de telle sorte que la température d'ébullition de l'agent d'extraction ou, respectivement, de la solution de lavage soit supérieure à 95 °C.
